# EUROPEAN PATENT APPLICATION

(11) **EP 4 317 103 A1**
(43) Date of publication of application: **07.02.2024**
(21) Application number: 22188976.9
(22) Date of filing: 05.08.2022
(51) Int. Cl.: C04B 28/02, C04B 24/12

(54) **DEGRADED AMINE SOLUTION AS PERFORMANCE ENHANCER**

(71) Applicant: Heidelberg Materials AG, 69120 Heidelberg (DE)
(72) Inventor: Nied, Dominik, 69120 Heidelberg (DE)
(74) Representative: Zellentin & Partner mbB Patentanwälte

(57) **Abstract**

Method for recycling of and use of an amine reclaimer waste composition obtained during reclaiming of an amine scrubbing solution used for extracting carbon dioxide from exhaust gas as a grinding aid for a binder component or as an admixture for enhancing the strength development and/or workability of a binder, as well as method for manufacturing a binder and obtainable binder comprising an amine reclaimer waste composition and use of the binder for manufacturing building materials.

## Description

The present invention relates to a method for recycling of and use of an amine reclaimer waste composition. The invention relates further to a binder comprising an amine reclaimer waste composition and the use of the binder for manufacturing building materials.

The amount of CO₂ in the earth's atmosphere is constantly increasing. Many processes unavoidably produce carbon dioxide containing exhaust gas, like power plants and cement clinker manufacturing. In principle, there are three approaches to reduce CO₂ emissions from exhaust gas: Pre-combustion capture (pre-combustion), combustion with oxygen (oxyfuel-combustion), and post-combustion capture (post-combustion). In the pre-combustion process, the fuel is first treated with oxygen, then converted to hydrogen and CO₂ with the addition of steam. Finally, the gaseous CO₂ is separated before combustion and hydrogen used as fuel. In the oxyfuel-process, combustion takes place with a mixture of oxygen and recirculating flue gas. Thereby, the withdrawn off-gas is more or less pure carbon dioxide which can be directly used in many applications or sent to storage. In post-combustion CO₂ capture, the CO₂ is extracted from the exhaust gas obtained after combustion. This usually necessitates a flue gas cleaning prior to the CO₂ separation step. But it is the easiest approach to retrofit and very common, therefore.

The most widely used technology for post-combustion CO₂ capture on a large scale is believed to be an amine scrubbing. Amine scrubbing uses an amine based scrubbing solution that is contacted with the exhaust gas. During contact, carbon dioxide is chemisorbed by the amines. The CO₂ loaded/rich scrubbing solution is then routed into a stripper or regenerator to release the CO₂ and to regenerate the amine scrubbing solution.

Aqueous solutions of alkanolamines are most commonly used as amine scrubbing solution on an industrial scale. Preferred alkanolamines used in the removal of CO₂ from gas streams include monoethanolamine, diethanolamine, triethanolamine, diisopropylamine, aminoethoxyethanol, 2-amino-2-methylpropan-1-ol and methyldiethanolamine. Also amines like piperazine and hexane-1,6-diamine are used.

However, during scrubbing and even more during regeneration of the amine scrubbing solution a degradation occurs. Amine scrubbing solutions for CO₂ absorption can degrade due to heat (so called thermal degradation) or due to the presence of the other constituents of the flue gas such as O₂, NOₓ, SOₓ, halogenated compounds and other impurities (so called chemical or oxidative degradation). Problematic degradation products formed in amine scrubbing solution are mainly heat stable salts and non-volatile organic compounds. Thus, regeneration comprises not only the release of CO₂ but also a subsequent reclaiming step to remove degradation products. Reclaiming is typically applied to a part of the stripped amine solution before passing it back into the absorption.

The main degradation products in alkanolamine scrubbing solutions include hydroxyethylimidazolidone, cyclic urea of 1-(2-((2-hydroxyethyl)amino)ethyl)imidazolidin-2-one), hydroxyethylethylenediamine, monoethanolamine trimer, ammonium salts, ethylenediamine, 2-imidazoline, formate salts, acetate salts, 1-aminoethyl-piperazine, N-hydroxyethyl-piperazine, 1-ethyl-piperazine, 1-methyl-piperazine, 1,4-dimethyl-piperazine, diethanolamine, N-methyl-aminoethanol, 1-formyl-piperazine, hydroxyethyl formamide, oxalate salts, oxylamide, nitrate salts, nitrite salts, hydroxyethylimidazole, N-(2-hydroxyethyl)-glycine, N-nitroso-piperazine, bicine, oxazolidin-2-one, N-(2-hydroxyethyl)imidazolidin-2-one, N,N'-bis-(2-hydroxyethyl)urea, N-(2-hydroxyethyl)-diethylenetriamine, N-[2-[(2-hydroxyethyl)amino] ethyl]imidazolidin-2-one, N-(2-aminoethyl)-N'-(2-hydroxyethyl)imidazolidin-2-one, N,N'-bis(2-hydroxyethyl)imidazolidin-2-one, glycine, glycolic acid, oxalamide, oxamic acid, N-(2-hydroxyethyl)formamide, oxalic acid, N-(2-hydroxyethyl)acetamide, 2-Hydroxy-N-(2-hydroxyethyl)acetamide, N-glycylglycine, N-(2-hydroxyethyl)oxamic acid, N-(2-hydroxyethyl)piperazin-2-one, N-(2-hydroxyethyl)piperazin-3-one, ,N'-bis(2-hydroxyethyl)ethylenediamine, N-(2-hydroxyethyl)-2-(2-hydroxyethyl-amino)acetamide, N,N'-bis(2-hydroxyethyl)oxalamide, 2-(Methylamino)ethanol, N-(2-hydroxyethyl)-succinimide, N,N,N'-tris(2-hydroxyethyl)ethylenediamine, N-(2-hydroxyethyl)aziridine, N-(2-hydroxyethyl)oxazolidin-2-one, N,N-bis(2-hydroxyethyl)ethylenediamine, Triethanolamine, N,N'-bis(2-hydroxyethyl)-piperazine, N,N,N'-tris(2-hydroxyethyl)ethylenediamine, Bis-(2-(2-hydroxyethyl-amino)ethyl)ether, N-(2-hydroxyethyl)-N'-(2-(2-hydroxyethylamino)-ethyl)piperazine, N-2-[bis(2-hydroxyethyl)-amino]ethylpiperazine, N-2-[bis(2-hydroxyethyl)-amino]ethyloxazolidin-2-one, N,N,N',N'-tetrakis(2-hydroxyethyl)urea, N,N,N',N'-tetrakis(2-hydroxyethyl)ethylenediamine, N-2-[bis(2-hydroxyethyl)-amino]ethyl-N'-(2-hydroxyethyl)piperazine, N,N,N',N'-tetrakis(2-hydroxyethyl)-diethylenetriamine, N,N,N',N"-tetrakis(2-hydroxyethyl)diethylenetriamine, Monoethanolamine, N-methyldiethanolamine, N,N'-bis(2-hydroxyethyl)piperazine, N,N,N'-tris(2-hydroxyethyl)ethylenediamine, Ethylene glycol, N,N-(dimethyl)ethanolamine, N-methylmorpholine, Diethanolamine, N,N'-dimethyl-piperazine, N-(2-hydroxyethyl)oxazolidin-2-one, N-(2-hydroxyethyl)-N'-methyl-piperazine, N,N'-bis(2-hydroxyethyl)piperazine, N-[2-(2-hydroxyethyl-methyl-amino)ethyl]-N'-methylpiperazine, N-methyl-N,N',N'-tris(2-hydroxyethyl)-ethylenediamine, N-[2-2-hydroxyethylmethylamino)ethyl]-N'-(2-hydroxyethyl)-piperazine, N,N,N',N'-tetrakis(2-hydroxyethyl)ethylenediamine, N-methyl-morpholin-2-one, N-methylmorpholin-2,6-dione, 2-[Methyl(2-hydroxyethyl)-amino] acetic acid, N,N'-trimethyl-N'-(2-hydroxyethyl)ethylenediamine, Ethyl enediamine, Imidazolidin-2-one, N-methylpiperazine, N,N'-dimethylpiperazine, N-formyl-piperazine, N-ethylpiperazine, N-(2-hydroxyethyl)-N'-methyl piperazine, N-(2-hydroxyethyl)piperazine, N,2,2-trimethylethanolamine, 4,4-Dimethyloxazolidin-2-one, N,4,4-trimethyloxazolidin-2-one, 4,4-Dimethyl-1-hydroxytertisobutyl-imidazolidin, 1,3-Bis-(2-hydroxy-1, 1-dimethylethyl)urea, 2,4-Lutidine, Diglycolamine, 2-Hydroxylmethylpiperidine, Diethylenetriamine, Piperidine, Hexamethyleneimine, Homopiperazine, Hexamethylenediamine, and other non-volatile amines.

A particularly hazardous degradation product, nitrosamine, is formed by the absorption of NO₂ as a nitrite. This nitrite can react with secondary amines, e.g. piperazine (Pz), and form carcinogenic nitrosamines, e.g. N-nitroso-piperazine (MNPz). Nitrosamines are relatively non-volatile and thermally unstable at reclaiming conditions, allowing for efficient removal through thermal reclaiming; e.g. less than 5 % of MNPz will return to the circulating solvent after thermally reclaiming Pz. The decomposition of nitrosamines can further be enhanced by the addition of NaOH during reclaiming.

Furthermore, other contents present in the flue gas, such as mercury, selenium, arsenic and other metals, will also dissolve in the amine scrubbing solution. Such effect can be minimized by a plant layout in which the amine scrubbing unit is tail-end and ideally after a gas cleaning and dedusting unit. But when that is not possible these components are also removed during reclaiming.

Thus, for reclaiming the amine scrubbing solution after the carbon dioxide has been stripped off the impurities formed and dissolved have to be separated from the solution. Several amine reclaiming technologies are available that separate the degraded components in the solution from the regenerated amine solution for CO₂ capture processes such as thermal reclaiming, ion exchange or electrodialysis. For example, Wang et al., Journal of Environmental Science, 27, (2015), 275-289 provides an overview about amine reclaiming technologies in post-combustion CO₂ capture. This document compares the distillation (thermal reclaiming), ion exchange and electrolyses for reclaiming amines.

An important environmental issue with respect to post-combustion capture using amine scrubbing is the generation of considerable amounts of degraded amine waste during reclaiming that has to be mitigated or disposed of properly, therefore. The products in the amine reclaimer waste composition generated during reclaiming range from hazardous to non harzardous. A disposal of hazardous compositions poses a major challenge. In the best case, the waste can be partly downcycled, e.g. it can be used as an NOₓ reduction agent (see e.g. D. Bothejue et al., Energy Procedia, 37, (2013), 691-700). If the amine reclaimer waste composition is classified as hazardous it can be subjected to thermal utilization in an incineration plant e.g. in cement kilns and power plants. In the worst case the amine reclaimer waste composition needs to go to hazardous waste landfill.

So far, a reasonable use of amine reclaimer waste compositions was not known. Accordingly, it is an object of the invention to provide a use of amine reclaimer waste compositions. Ideally, the use should not focus on proper disposal, but allow a beneficial use of the amine reclaimer waste composition.

Surprisingly, it has now been found that amine reclaimer waste compositions can be used as cement admixtures to improve either the grinding process and/or the performance of a binder, especially of a hydraulic binder.

Thus, the above-mentioned problem is solved by a use of amine reclaimer waste compositions obtained during reclaiming of an amine scrubbing solution used for extracting carbon dioxide from exhaust gas as a grinding aid for a binder component, especially a hydraulic binder component, or as an admixture for enhancing the strength development and/or workability of the binder, especially of the hydraulic binder.

The invention also solves the problem by and relates to a method for recycling an amine reclaimer waste composition obtained during reclaiming of an amine scrubbing solution used for extracting carbon dioxide from exhaust gas as a grinding aid for a binder component, especially a hydraulic binder component, or as an admixture for enhancing the strength development and/or workability of the binder, especially of the hydraulic binder.

The invention further solves the problem by providing and relates to a binder, especially a hydraulic binder, obtainable by a method according to the invention and a use of the binder, especially of the hydraulic binder, for manufacturing building materials, especially hydraulic building materials, preferably mortar or concrete.

The method for recycling of and use of an amine reclaimer waste composition according to the invention has at least one of the following advantages:
- improving the sustainability of an amine-based post-combustion CO₂ capture process,
- changing an amine reclaimer waste composition into a value added product,
- improving a binder component grinding process,
- improving the performance of a binder,
- improving the operational efficiency at large by reducing the need to purchase other admixtures as grinding aids or quality improvers and by avoiding costs for waste disposal.

"Hydraulic binder" in the sense of the invention is a finely ground inorganic material which, when mixed with water, forms a paste which sets and hardens by means of hydration reaction and which, after hardening, retains its strength and stability even under water. Among the hydraulic binders all kinds of cements can be cited, as defined and classified in DIN EN 197-1:2011, DIN EN 197-5:2021, DIN EN 413-1:2011, and DIN EN 15368:2010, DRAFT EN 197-6:2022. Besides such standardized cements, cement includes any hydraulically reactive composition, for example, but not limited to dicalcium silicate cement obtained by hydrothermal treatment, geopolymer binder, super sulphated cement and cement that contains carbonated recycled concrete paste as described in EP 3 498 681 A1 as a minor or a main constitutent. The term "binder" designates hydraulic binders and inorganic materials that harden by reaction with carbon dioxide or by concurrent and/or consecutive hydration and carbonation, e.g. binders as described in EP 3 466 900 A1, EP 3 694 818 A1, EP 3 954 668 A1, and EP 3 995 470 A1. Consecutive means any order of hydration and carbonation including a combination of more than one hydration step with carbonation or of more than one carbonation step with hydration. Thus, unless stated otherwise or following from the context the term "cement" also denotes materials that harden hydraulically and/or by carbonation.

"Paste" in the sense of the invention is a binder, especially a hydraulic binder, that has been mixed with water but has not hardened, yet.

"Concrete" in this context is a mixture of hydraulic binder, sand, gravel, and water, as defined and classified in the DIN EN 206-1:2016. "Mortar" according to the invention is a mixture of hydraulic binder, sand and water, typically used in thin layers, i.e. it is a specific type of concrete with a small maximum aggregate size, as defined and classified in the DIN EN 998-1:2016, and DIN EN 1504:2005. Both terms designate both the fresh material which is not hardened, yet, as well as the hardened material. Further, analogous materials obtained with binders that harden by reaction with carbon dioxide or by consecutive and/or concurrent carbonation and hydration are included in the terms concrete and mortar with the proviso that they contain the carbonation hardening cement/binder instead of the hydraulic cement/binder.

The term "reactive" denotes a hydraulic reactivity unless specified otherwise. Hydraulic reactivity means the reaction of a material with water or water containing compounds or compositions to form hydrated phases including a reaction of two or more compounds occurring simultaneously.

The term "supplementary cementitious material" (SCM) is herein defined as a pozzolanic and/or latent hydraulic material useful to replace a part of the cement in a binder. Latent hydraulic materials have a composition that allows hydraulic reaction upon contact with water, wherein typically an activator is needed to enable hardening within technically feasible times. Activator means a substance that accelerates the hardening of latent hydraulic materials. It can be an additive like a sulfate or calcium (hydr)oxide and/or products of the hydraulic reaction of the ground clinker, e.g. calcium silicates that liberate calcium hydroxide during hydration. Pozzolanic materials are characterized by a content of reactive silica and/or alumina which form strength providing calcium silicate hydrates and calcium aluminate hydrates, respectively, during hydration of the clinker together with the calcium hydroxides liberated. In practice the boundary between latent hydraulic and pozzolanic materials is not clearly defined, for example fly ashes can be both, latent hydraulic and pozzolanic, depending on their calcium oxide content. Consequently, the term SCM designates both, latent hydraulic as well as pozzolanic materials. However, not reactive or only slightly reactive materials like limestone that substantially do not take part in the hydraulic reactivity have to be clearly differentiated from SCM, with which they are sometimes summarized as mineral additions.

The invention relates to a use of an amine reclaimer waste composition obtained during reclaiming of an amine scrubbing solution used for extracting carbon dioxide from exhaust gas as a grinding aid for a binder component, especially a hydraulic binder component, or as an admixture for enhancing the strength development and/or workability of the binder, especially of the hydraulic binder.

The amine reclaimer waste composition arises during reclaiming of amine scrubbing solutions as mentioned above and well known in the art. Amine scrubbing, also known as amine gas treating, gas sweetening and acid gas removal, refers to a group of processes that use aqueous solutions of one or more alkylamine(s), especially substituted alkylamines, like alkanolamines, or nitrogen heterocycles to extract carbon dioxide (CO₂) from gases. It is a common process unit used in refineries, petrochemical plants, natural gas processing plants and other industries. Amine scrubbing is based on the principle of chemisorption and thus achieves high purities of the cleaned exhaust gas even at relatively low pressures in the absorption device. The selectivity is also usually higher than with physisorption.

The term "amine scrubbing solution" as used herein refers to any liquid comprising an amine which is used to absorb CO₂ from a gas stream. The amine is any amine which captures carbon dioxide (CO₂) from a gas stream. In a preferred embodiment, the amine scrubbing solution comprises an amine selected from monoethanolamine, diethanolamine, triethanolamine, diisopropylamine, aminoethoxyethanol, 2-amino-2-methylpropan-1-ol, methyldiethanolamine, piperazine, hexane-1,6-diamine, and mixtures of two or more thereof. The concentration of the amines and the nature of the amines in the amine scrubbing solution is not critical for the present invention.

The exhaust gas scrubbed with the amine scrubbing solution usually contains from 10 Vol.-% to 95 Vol.-%, in particular from 10 to 50 Vol.-%, especially from 10 Vol.-% to 30 Vol.-%, CO₂ based on the total volume of the exhaust gas. For extraction of the CO₂ the exaust gas is contacted with the amine scrubbing solution. Thereby, the amine scrubbing solution is loaded with carbon dioxide. Either carbon dioxide reacts directly with one of the amines present in the amine scrubbing solution or carbon dioxide is part of a series of reactions to form a set of products.

The loaded amine scrubbing solution is then passed into a regenerator or stripper in which the CO₂ is released from the amine solution. Due to the above mentioned degradation processes of the amine solution at least a part of the now CO₂ free solution is not directly pumped back to the absorber but has to undergo a reclaiming step. Preferably the reclaiming process is selected from thermal reclaiming, ion exchange and electrodialysis. In this reclaiming step the degradation products, i.e. heat stable salts, non-volatile organic compounds and suspended solids are separated from the solution to provide a reclaimed amine scrubbing solution that can be used again in the CO₂ absorption step. The separated amine reclaimer waste composition is a complex mixture of one or more of solvents, amine based degradation products, heat stable salts, non-volatile organic compounds and suspended solids.

In a preferred embodiment reclaiming of the amine scrubbing solution comprises distillation. The amine reclaimer waste composition is preferably obtained as bottom fraction from the distillation procedure.

Typically, the amine reclaimer waste composition has a hydroxyl value in the range of 5 to 1000 mg KOH/g, preferably in the range of 50 to 750 mg KOH/g and most preferably in the range of 100 to 500 mg KOH/g.

The hydroxyl value is defined as the number of milligrams of potassium hydroxide required to neutralize the acetic acid taken up on acetylation of one gram of a chemical substance that contains free hydroxyl groups. Hydroxyl value is a measure of the content of free hydroxyl groups in the amine reclaimer waste, expressed in units of the mass of potassium hydroxide (KOH) in milligrams equivalent to the hydroxyl content of one gram of the amine reclaimer waste. The analytical method used to determine the hydroxyl value traditionally involves acetylation of the free hydroxyl groups of the amine reclaimer waste with acetic anhydride in pyridine solvent. After completion of the reaction, water is added, and the remaining unreacted acetic anhydride is converted to acetic acid and measured by titration with potassium hydroxide. ASTM D 1957 and ASTM E222-10 describe the method of determining hydroxyl value. Depending on the pH of the reclaimer waste composition a neutralisation step is required before determining the hydroxyl value.

Usually, the amine reclaimer waste composition has a nitrogen content - mostly in the form of amines - in the range of 0.1 to 20 % by weight, preferably in the range of 0.5 to 10 % by weight, and most preferred in the range of 2 to 8 % by weight, based on the total reclaimer waste composition. The nitrogen content of a reclaimer waste composition can be determined via elemental analyzers. The method is e.g. described in EN ISO 21663:2021.

In particular the amine reclaimer waste composition comprises at least one amine selected from
- amines of the formula (I): NR¹R²R³, wherein
   R¹ is selected from C₁-C₆ alkyl and C₂-C₆ hydroxyalkyl,
   R² is selected from formyl, acetyl, carboxyl, C₁-C₆ alkyl, C₁-C₆ alkyl carbonyl, C₁-C₆ hydroxyalkyl, C₂-C₆ alkylamin, C₂-C₆ alkylamino-C₂-C₆ alkylamin, and carbamoyl-C₂-C₆-hydroxyalkyl, and
   R³ is selected from H and C₁-C₆ alkyl;
- 5- to 7-membered saturated heterocycles having at least one nitrogen atom in the ring, which can comprise one or two further hetero atoms as ring members selected from NR^{x}, O, S, SO and SO₂, wherein the heterocycle is unsubstituted or substituted by 1, 2, or 3 identical or different substituents selected from C₁-C₆ alkyl, C₂-C₆ hydroxyalkyl, C₂-C₆ alkylamin and oxo; and R^{x} is selected from hydrogen, C₁-C₆ alkyl, C₂-C₆ hydroxyalkyl, C₂-C₆ alkylamino-C₂-C₆ hydroxyalkyl, and C₂-C₆ alkylamin;
and mixtures thereof.
Typically, the amine reclaimer waste composition comprises additionally unreacted/non-degraded amines. In particular, the amine reclaimer waste composition comprises 1 % by weight - 70 % by weight non-degraded amines, based on the total weight of the amine reclaimer waste composition.

In one preferred embodiment the amine reclaimer waste composition comprises at least one amine selected from amines of the formula (I) as defined above. In particular the amine reclaimer waste composition comprises at least one amine selected from hydroxyethylethylenediamine, monoethanolamine trimer, ethylenediamine, diethanolamine, N-methyl-aminoethanol, N-(2-hydroxyethyl)-glycine and bicine.

In one preferred embodiment the amine reclaimer waste composition comprises at least one amine selected from 5- to 7-membered saturated heterocycles having at least one nitrogen atom in the ring, which can comprise one or two further hetero atoms as ring members, selected from NR^{x}, O, S, SO and SO₂, wherein the heterocycle is unsubstituted or substituted by 1, 2, or 3 identical or different substituents selected from C₁-C₆ alkyl, C₂-C₆ hydroxyalkyl, C₂-C₆ alkylamin and oxo; and R^{x} is selected from hydrogen, C₁-C₆ alkyl, C₂-C₆ hydroxyalkyl, C₂-C₆ alkylamino-C₂-C₆ hydroxyalkyl, and C₂-C₆ alkylamin. In particular the amine reclaimer waste composition comprises at at least one amine selected from hydroxyethylimidazolidone, cyclic urea of 1-(2-((2-hydroxyethyl)amino)ethyl)imidazolidin-2-one, 2-imidazoline, 1-aminoethyl-piperazine, 1-hydroxyethyl-piperazine, 1-ethyl-piperazine, 1-methyl-piperazine, 1,4-dimethyl-piperazine, 1-formyl-piperazine, hydroxyethylimidazole and N-nitroso-piperazine.

Preferably the amine reclaimer waste composition is used as grinding aid and/or admixture in the form in which it is obtained from reclaiming. Thus, the amine reclaimer waste composition can contain a solvent, wherein the solvent is preferably water. The amount of solvent is up to 70 % by weight based on the total reclaimer waste composition. The amine reclaimer waste composition can also be used in dry form. Therein, drying can be accomplished before or after mixing with a binder component. The amine reclaimer waste composition can also be diluted, preferably diluted with water. The amine reclaimer waste composition may also be purified. Preferably, it is purified by filtration or distillation. Futhermore, it is also possible to adjust the pH-value by adding an acid or base.

The invention also relates to a method for recycling of an amine reclaimer waste composition obtained during reclaiming of an amine scrubbing solution used for extracting carbon dioxide from exhaust gas as a grinding aid for a binder component, especially a hydraulic binder component, or as an admixture for enhancing the strength development and/or workability of the binder, especially of the hydraulic binder. Therein, the amine reclaimer waste composition as well as the amine scrubbing solution are as defined above.

Preferably, the method for recycling the amine reclaimer waste composition as grinding aid comprises the steps
a) providing the amine reclaimer waste composition as defined above,
b) providing at least one binder component, especially at least one hydraulic binder component,
c) mixing the composition with the component,
d) grinding the mixed composition and component.
It is possible to add other grinding aids, for example, but not limited to, alkanolamines like mono-, di- or triethanolamine, mono-, di- or triisopropanolamine as well as other amines and nitrogen compounds like tris(hydroxymethyl)aminomethane, N-methyldiethanolamine, 2-amino-2-methyl-1,3-propandiol, N-butyldiethanolamine, N,N-bis-(2-hydroxyethyl)-2-propanolamine, N,N-bis-(2-hydroxypropyl)-N-(hydroxyethyl)amine, di-(hydroxyethyl)-1,2-diaminopropane, tetra-(hydroxyethyl)-1,2-diaminopropane, ethoxy bearing polyglycoldiamines, N,N,N'-tri-(hydroxyethyl)ethylenediamine, N,N,N'-tri-(hydroxyethyl)diethylenediamine, N,N'-di-(hydroxyethyl)ethylenediamine, N,N'-bis(2-hydroxypropyl)diethylenetriamine, N,N,N',N'-tetra(hydroxyethyl)ethylenediamine, N,N,N',N',N"-penta(hydroxyethyl)diethylenetriamine, N,N'-bis-(2-hydroxy-propyl)-N,N,N'-tri-(hydroxyethyl)diethylenetriamine, poly(hydroxyethyl)polyethyleneimine, poly(hydroxyalkyl)polyethyleneamine, 1,2-diaminopropane, polyglycoldiamine or mixtures of two or more of these. It is further possible to add an organic polyol selected from C₂ to C₆ polyalcohols or mixtures thereof and/or one or more water soluble ammonium salt(s), alkali salt(s), or alkaline earth salt(s). Preferred salts are hydroxide, chloride, thiocyanate, nitrate, nitrite, carbonate, hydrogencarbonate, acetate, sulfate, sulfite, formiate, phenolate, silicate and/or gluconate.

The method for recycling the amine reclaimer waste composition as admixture preferably comprises the steps:
i) providing the amine reclaimer waste composition as defined above,
ii) providing a binder, especially a hydraulic cement
iii) blending the composition with the cement.
If desired, further components are mixed into the binder, especially into the hydraulic binder, or are provided together with the cement, especially the hydraulic cement, for example but not limited to sulfate carriers, supplementary cementitious materials, additional admixtures like plasticizers, shrinkage reducers, retarders, defoamers, corrosion inhibitors and air entraining agents, and additives like mineral fillers and pigments. A combination with such further admixtures is preferred when a fast strength development is desired. It is also possible to add other grinding aids, for example, but not limited to, alkanolamines like mono-, di- or triethanolamine, mono-, di- or triisopropanolamine as well as other amines and nitrogen compounds like tris(hydroxymethyl)aminomethane, N-methyldiethanolamine, 2-amino-2-methyl-1,3-propandiol, N-butyldiethanolamine, N,N-bis-(2-hydroxyethyl)-2-propanolamine, N,N-bis-(2-hydroxypropyl)-N-(hydroxyethyl)amine, di-(hydroxyethyl)-1,2-diaminopropane, tetra-(hydroxyethyl)-1,2-diaminopropane, ethoxy bearing polyglycoldiamines, N,N,N'-tri-(hydroxyethyl)ethylenediamine, N,N,N'-tri-(hydroxyethyl)diethylenediamine, N,N'-di-(hydroxyethyl)ethylenediamine, N,N'-bis(2-hydroxypropyl)diethylenetriamine, N,N,N',N'-tetra(hydroxyethyl)ethylenediamine, N,N,N',N',N"-penta(hydroxyethyl)diethylenetriamine, N,N'-bis-(2-hydroxy-propyl)-N,N,N'-tri-(hydroxyethyl)diethylenetriamine, poly(hydroxyethyl)polyethyleneimine, poly(hydroxyalkyl)polyethyleneamine, 1,2-diaminopropane, polyglycoldiamine or mixtures of two or more of these. It is further possible to add an organic polyol selected from C₂ to C₆ polyalcohols or mixtures thereof and/or one or more water soluble ammonium salt(s), alkali salt(s), or alkaline earth salt(s). Preferred salts are hydroxide, chloride, thiocyanate, nitrate, nitrite, carbonate, hydrogencarbonate, acetate, sulfate, sulfite, formiate, phenolate, silicate and/or gluconate.

The invention further relates to a method for manufacturing a binder, especially a hydraulic binder, comprising the steps:
a) providing an amine reclaimer waste composition as defined above,
b) blending the amine reclaimer waste composition with at least one binder component, especially with at least one hydraulic binder component, and
c) grinding the amine reclaimer waste composition blended with the component to provide the binder, especially the hydraulic binder,
with the proviso that a cement, especially a hydraulic cement, is additionally blended with the ground amine reclaimer waste composition blended with the component before or after step c) in case the component in step b) is not a cement or a hydraulic cement, respectively.
Preferably, the binder component is selected from cements, especially hydraulic cements, cement clinkers, especially hydraulic cement clinkers, supplementary cementitious materials, and mineral fillers. Preferred cements are cements as defined and classified in DIN EN 197-1:2011, DIN EN 197-5:2021, DIN EN 413-1:2011, and DIN EN 15368:2010, DRAFT EN 197-6:2022. The clinker is preferably Portland cement clinker., The SCM is preferably a cement component as defined and classified in DIN EN 197-1:2011, DIN EN 197-5:2021, DIN EN 413-1:2011, and DIN EN 15368:2010, DRAFT EN 197-6:2022 and/or carbonated recycled concrete fines, slags from steel production and side products from alumina production, e.g. chemically modified red mud. The filler is preferably a filler as defined and classified in DIN EN 197-1:2011, DIN EN 197-5:2021, DIN EN 413-1:2011, and DIN EN 15368:2010, DRAFT EN 197-6:2022, and side products from aggregate production. Further, the same admixtures and additional components as described for the method of recycling the reclaimer waste composition above can be added.

The amine reclaimer waste composition is used as obtained from reclaiming or in dry form. For use in dry form the amine reclaimer waste composition is dried before step a) or the amine reclaimer waste composition blended with the component is dried after step b) or c). The amine reclaimer waste composition can also be diluted, preferably diluted with water. The amine reclaimer waste composition may be purified for recycling/using it as grinding aid. Preferably, the purification is obtained by filtration or a second distillation. Futhermore, it is also possible to adjust the pH-value by adding an acid or base.

Grinding in step c) is carried out with devices and methods well known to one skilled in the art. Preferably, the ground product from step c) has a Blaine fineness between 2000 and 15000 cm²/g determined according to DIN EN 196-6:2019 Chapter 4, or a d₉₀ below 100 µm determined by laser diffraction according to ISO 13320:2020, or a sieve residue on a 90 µm sieve of below 5 % by weight determined according to DIN EN 196-6:2019 Chapter 5.

It is preferred that the cement, especially the hydraulic binder, has a Blaine fineness from 2000 to 15000 cm²/g, preferably from 3000 to 12000 cm²/g or from 4000 to 11000 cm²/g. It is preferred that the cement, especially the hydraulic binder, has a d₉₀ below 100 µm, preferably below 70 µm or below 40 µm. It is preferred that the cement, especially the hydraulic binder, has a sieve residue on a 90 µm sieve below 5 % by weight, preferably below 1 % by weight or below 0.5 % by weight.

The binder, especially the hydraulic binder, according to the invention and obtainable by a method according to the invention comprises a cement and the amine reclaimer waste composition as defined above. The cement is preferably a hydraulic cement, which is preferably selected from Portland cement, Portland composite cement, calcium sulfoaluminate cement, calcium aluminate cement and dicalcium silicate cement. Most preferred cements are Portland cements according to DIN-EN 197-1, DIN-EN 197-5, calcium sulfoaluminate cement and calcium aluminate cement. Especially preferred are Portland cements according to DIN EN 197-1 and DIN EN 197-5.

Preferably, the binder comprises from 4.9 to 99.9 % by weight of cement and from 0.001 to 3 % by weight of amine reclaimer waste composition. More preferably, the binder comprises from 4.9 to 99.9 % by weight of cement and from 0.01 to 1 % by weight of amine reclaimer waste composition. And most preferred, the binder according to the invention comprises from 5 to 99.9 % by weight cement and from 0.01 to 0.5 % by weight amine reclaimer waste composition.

The invention further relates to a use of the binder, especially the hydraulic binder, according to the invention or obtainable by the method according to the invention for manufacturing building materials, especially hydraulic building materials, preferably mortar or concrete. Therein, the binder, especially the hydraulic binder, according to the invention or obtainable by a method according to the invention is mixed with water and typically also aggregate as well as optionally with other admixtures than the amine reclaimer waste composition and/or with additives in a manner known per se.

Thus, for use, the binder, especially the hydraulic binder, is transformed into a building material, especially a hydraulic building material, e.g. into mortar or concrete, by mixing with water and aggregate. Typically, a water to binder weight ratio (w/b) from 0.1 to 1, preferably from 0.15 to 0.75, and more preferred from 0.35 to 0.65 is used. An SCM present in the binder is calculated as binder for the w/b. The building material often also contains further admixtures than the amine reclaimer waste composition and/or additives.

Admixtures are usually used to optimize the properties like setting time, hardening time, spread, viscosity and homogeneity of the building material as well as to impart desired properties to the final building structure, e.g. hardened concrete part, like strength, flexural modulus, freeze-thaw-resistance and many more. These admixtures are known per se and are used in their usual amounts. Admixtures like water reducing agents, plasticizers and super plasticizers to adjust consistency while keeping the w/b ratio in the suitable range are preferable admixtures. Useful water reducing agents, plasticizers and super plasticizers are for example, but not exclusively, organic compounds with one or more functional group selected from carboxylate, sulfonate, phosphonate, phosphate or alcohol functional groups. Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulphonates, hydroxycarboxylic acids and their salts, phosphonates, sugars (saccharides). Furthermore, it is possible to use admixtures that improve the concrete durability performance like air entrains or hydrophobic agents. Admixtures can also be added to the binder, if they are dry substances or specially fomulated solutions for liquid dosage.

Typical additives are for example glass fibres, waste glass, polymer fibres, cement kiln dust, silica fume, pigments and mixtures thereof. One or more of them can be used in the usual amount. Additives are often added to the binder, since most are dry substances.

The invention will be illustrated further with reference to the figures//examples that follow, without restricting the scope to the specific embodiments described. The invention includes all combinations of described and especially of preferred features that do not exclude each other.

If not otherwise specified, any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

In the figures:
Figure 1 shows the specific heat measured during hydration of binders according to the invention. The heat of hydration was determined acc. to DIN EN 196-11.
Figure 2 shows the relative Blaine fineness of ground clinker according to the invention. The Blaine fineness was determined acc. to DIN EN 196-6.
Figure 3 shows the relative d(90) value of a clinker ground according to the invention. The d(90) value is a parameter generated from a particle size distribution analysis. The particle size distribution analysis was performed according to ISO 13320 in Isopropanol as dispersion agent. A d(90) value of e.g. 50 µm means that 90 % of the sample is smaller than 50 µm. Hence in the present example a relative d(90) value < 100 % means that the ground clinker is finer than the reference.

### Example 1

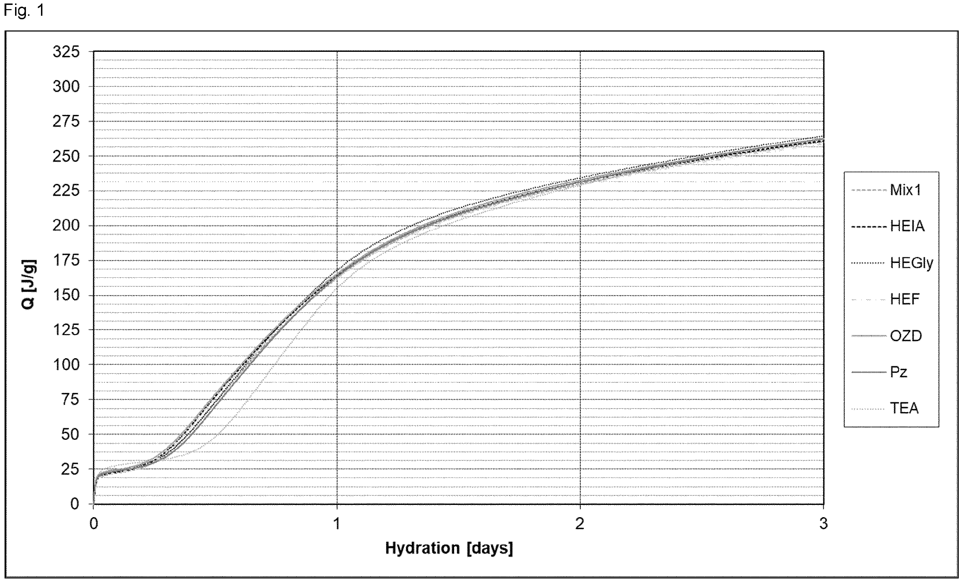

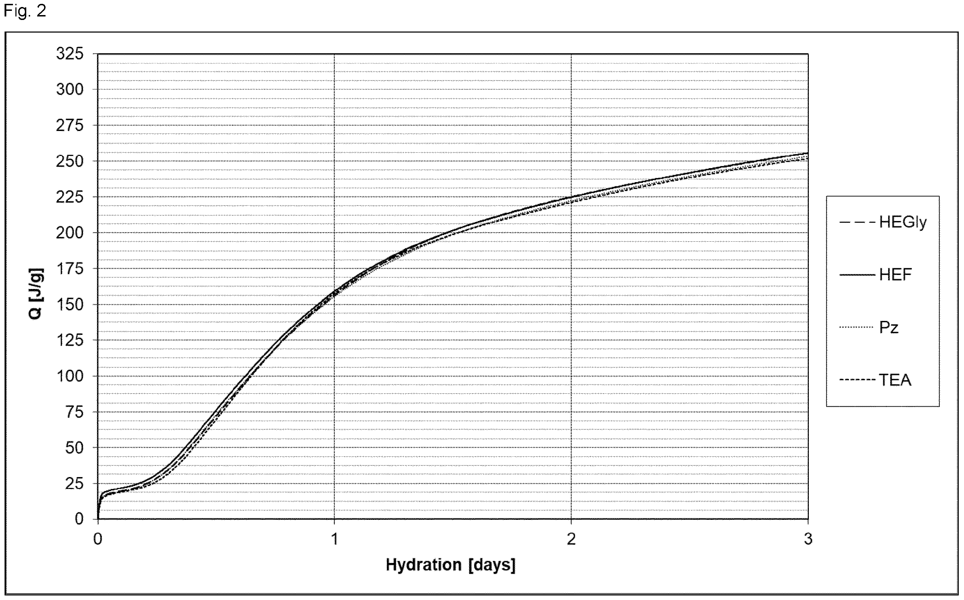

A simulated amine reclaimer waste composition (Mix1) was made from 10 % by weight hydroxyethylimidazolidone (HEIA), 50 % by weight N-(2-hydroxyethyl)-glycine (HEGly), 20 % by weight hydroxyethyl formamide (HEF), 10 % by weight sodium sulfate and 10 % by weight sodium oxalate. Mix1 had a hydroxyl value of 360, a nitrogen content of 10 wt.-% and was dissolved in water. The obtained clear solutions were added to a cement CEM II/A-LL 32,5 R (acc. to DIN EN 197-1) as mixing water at a water to binder ratio of 0.4 according to EN 196-11. The cement had a sieve residue on a 90 µm sieve of 0.92 % by weight, a Blaine fineness of 3780 cm²/g, and a d₉₀ of 63.4 µm. The investigated active components were dosed at a solid content to binder ratio of 0.083 % by weight and selected constituents of reclaimer waste at 0.024 % by weight to obtain binders according to the invention. Mix1 represents the simulated reclaimer waste composition. Additionally, the pure amine components of Mix1, oxazolidin-2-one (OZD) and piperazine (Pz) were tested. A reference binder was provided with the addition of triethanolamine (TEA) as state of the art performance enhancer. Hydration took place in a sealed glass ampule directly in the calorimeter. Figure 1 shows the cumulative heat flow measured during hydration for the first three days at a dosed content of 0.083 % by weight. Figure 2 shows the cumulative heat flow measured during hydration for the first three days at a dosed content of 0.024 % by weight. The cumulated heat flow on day 3 is listed in table 1.

**Table 1**

| added material | cumulative heat [J/g] at a dosage of | |
|---|---|---|
| | 0.083 % | 0.024 % |
| Mix1 | 260 | not tested |
| HEIA | 261 | not tested |
| HEGly | 264 | 256 |
| HEF | 258 | 256 |
| OZD | 262 | not tested |
| Pz | 251 | 253 |
| TEA | 262 | 252 |

The results in the figure and the table show that the binders comprising the simulated amine reclaimer waste composition or components thereof developed similar heat, i.e. hydration proceeded similar as that of the reference binder with a state of the art performance enhancer. This correlates with a similar strength development and early strength compared to a binder without enhancer. Thus, the amine reclaimer waste is a useful performance enhancer for binders.

### Example 2

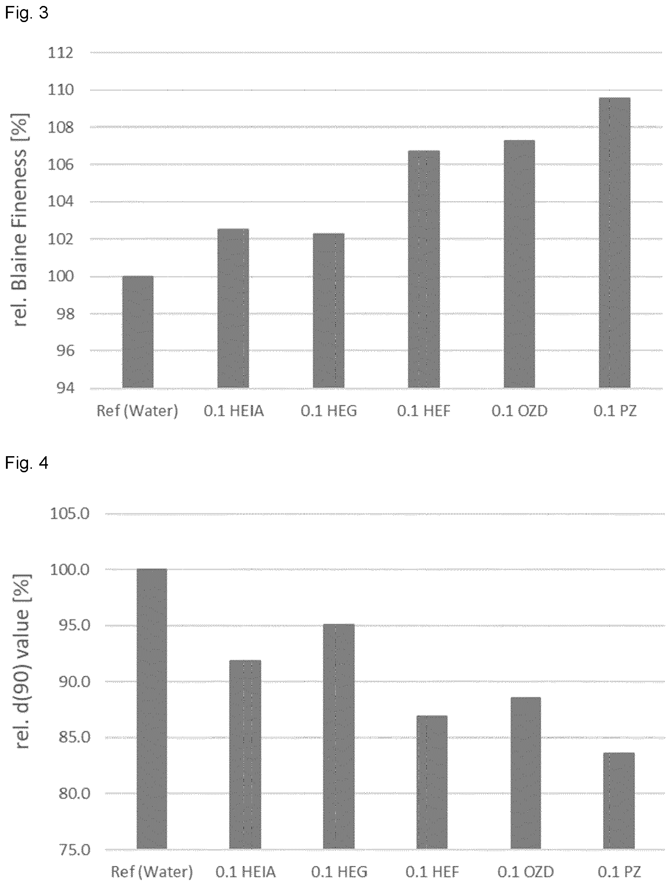

Different typical components of amine reclaimer waste compositions, i.e. pure chemicals, were added as solution in water to a portland cement clinker in an amount of 0.1 % by weight. The solutions had a concentration of 33 % by weight so that the concentration of solid active ingredient with respect to clinker was 0.03 % by weight. As reference a clinker was mixed with 0.1 % by weight of water. The clinker chemistry determined as described in DIN EN 196-2:2013 as well as the mineralogical composition determined as described in DIN EN 13925-2:2003 is shown in table 2. The clinkers with addition and the one without as reference were then ground in a planetary ball mill. Grinding time was kept constant for all grindings. Figure 3 depicts the achieved Blaine fineness relative to that of the reference clinker without added amine reclaimer waste composition but only water. Figure 4 shows the respective d₉₀ values relative to that of the reference clinker. It is apparent that the amine reclaimer waste components are effective grinding aids. The achieved Blaine fineness could be increased and the d₉₀ value decreased when keeping the grinding time constant.

**Table 2**

| | Chemistry and mineralogy of clinker [% by weight] |
|---|---|
| LOI | 0.18 |
| SiO₂ | 20.5 |
| Al₂O₃ | 5 |
| TiO₂ | 0.35 |
| MnO | 0.06 |
| Fe₂O₃ | 3.12 |
| CaO | 65.1 |
| MgO | 2.49 |
| K₂O | 1.29 |
| Na₂O | 0.37 |
| SO₃ | 1.44 |
| P₂O₅ | 0.12 |
| C₃S (M1) | 15.5 |
| C₃S (M3) | 54.6 |
| C₂S (beta) | 5.9 |
| C₂S (alpha) | 0.3 |
| C₃A (cub) | 5.1 |
| C₃A (ortho) | 2.2 |
| C₄AF | 9.9 |
| mayenite | 0.7 |
| free lime | 2.2 |
| periclase | 1.4 |
| arkanite | 0.2 |
| aphthitalite | 1.6 |
| syngenite | 0.3 |

### Example 3

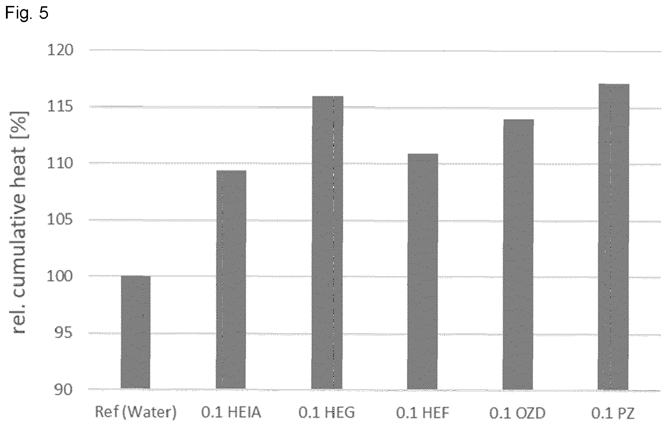

The clinkers obtained as described in example 2 were blended with a sulphate carrier at an amount of 4 % by weight to a CEM I cement as defined and described in DIN EN 197-1. The chemical composition determined according to DIN EN 196-2:2013 is shown in table 3. The heat of hydration of the cements was determined at a water to binder ratio of 0.4 according to EN 196-11. Hydration took place in a sealed glass ampule directly in the calorimeter. Figure 5 depicts cumulative heat flow after 3 d of hydration relative to the cement obtained by blending the clinker ground with water with the sulphate carrier. It is apparent that the amine reclaimer waste components are effective grinding aids and performance enhancers. The binders comprising reclaimer waste compositions achieved higher heat of hydration values. This correlates with a higher strength development and early strength compared to a binder without enhancer.

**Table 3**

| | Chemistry and mineralogy of sulphate carrier [% by weight] |
|---|---|
| LOI | 3.92 |
| SiO₂ | 2.48 |
| Al₂O₃ | 0.71 |
| TiO₂ | 0.04 |
| MnO | 0.01 |
| Fe₂O₃ | 0.29 |
| CaO | 38.1 |
| MgO | 1.56 |
| K₂O | 0.19 |
| Na₂O | 0 |
| SO₃ | 52.5 |
| P₂O₅ | 0 |
| gypsum | 1.6 |
| anhydrite | 88.8 |
| dolomite | 7.6 |
| quartz | 2.0 |

## Claims

1. Use of an amine reclaimer waste composition obtained during reclaiming of an amine scrubbing solution used for extracting carbon dioxide from exhaust gas as a grinding aid for a binder component or as an admixture for enhancing the strength development and/or workability of a binder.

2. Method for recycling of an amine reclaimer waste composition obtained during reclaiming of an amine scrubbing solution used for extracting carbon dioxide from exhaust gas as a grinding aid for a binder component or as an admixture for enhancing the strength development and/or workability of a binder.

3. Method and use according to claim 1 or 2, wherein reclaiming of the amine scrubbing solution comprises distillation and the amine reclaimer waste composition is obtained as bottom fraction from the distillation.

4. Method and use according to one of claims 1 to 3, wherein the amine scrubbing solution comprises an amine selected from monoethanolamine, diethanolamine, triethanolamine, diisopropylamine, aminoethoxyethanol, 2-amino-2-methylpropan-1-ol, methyldiethanolamine, piperazine, hexane-1,6-diamine, and mixtures of two or more thereof.

5. Method and use according to one of claims 1 to 4, wherein the amine reclaimer waste composition has a hydroxyl value in the range from 5 to 1000 mg KOH/g, preferably in the range from 50 to 750 mg KOH/g, and most preferred in the range from 100 to 500 mg KOH/g.

6. Method and use according to one of claims 1 to 4, wherein the amine reclaimer waste composition has a nitrogen content - mostly in the form of amines - in the range from 0.1 to 20 % by weight, preferably in the range from 0.5 to 10 % by weight, and most preferred in the range from 2 to 8 % by weight, based on the total amine reclaimer waste composition.

7. Method and use according to one of claims 1 to 6, wherein the binder is a hydraulic binder and/or the binder component is a cement clinker, a cement, a supplementary cementitious material, and/or a filler.

8. Method and use according to claim 7, wherein the cement is a cement as defined and classified in DIN EN 197-1:2011, DIN EN 197-5:2021, DIN EN 413-1:2011, DIN EN 15368:2010, and DRAFT EN 197-6:2022, and/or the clinker is Portland cement clinker, and/or the supplementary cementitious material is a cement component as defined and classified in DIN EN 197-1:2011, DIN EN 197-5:2021, DIN EN 413-1:2011, DIN EN 15368:2010, and DRAFT EN 197-6:2022, and/or the filler is a filler as defined and classified in DIN EN 197-1:2011, DIN EN 197-5:2021, DIN EN 413-1:2011, DIN EN 15368:2010, DRAFT EN 197-6:2022, or a side product from aggregate production.

9. Method and use according to one of claims 1 to 8, wherein the amine reclaimer waste composition comprises at least one amine selected from
a) amines of the formula (I): NR¹R²R³, wherein
R¹ is selected from C₁-C₆ alkyl and C₂-C₆ hydroxyalkyl R² is selected from formyl, acetyl, carboxyl, C₁-C₆ alkyl, C₁-C₆ alkyl carbonyl, C₁-C₆ hydroxyalkyl, C₂-C₆ alkylamin, C₂-C₆ alkylamino-C₂-C₆ alkylamin, and carbamoyl-C₂-C₆-hydroxyalkyl
R³ is selected from H and C₁-C₆ alkyl
b) 5- to 7-membered saturated heterocycles having at least one nitrogen atom in the ring, which can comprise one or two further hetero atoms as ring members selected from NR^{x}, O, S, SO and SO₂, wherein the heterocycle is unsubstituted or substituted by 1, 2, or 3 identical or different substituents selected from C₁-C₆ alkyl, C₂-C₆ hydroxyalkyl, C₂-C₆ alkylamin and oxo; and R^{x} is selected from hydrogen, C₁-C₆ alkyl, C₂-C₆ hydroxyalkyl, C₂-C₆ alkylamino-C₂-C₆ hydroxyalkyl, and C₂-C₆ alkylamin;
c) amines from the amine scrubbing solution;
and
d) mixtures thereof.

10. Method and use according to one of claims 1 to 9, wherein the amine reclaimer waste composition comprises one or more of hydroxyethylimidazolidone, cyclic urea of 1-(2-((2-hydroxyethyl)amino)-ethyl)imidazolidin-2-one), hydroxyethylethylenediamine, monoethanolamine trimer, ammonium salts, ethylenediamine, 2-imidazoline, formate salts, acetate salts, 1-aminoethyl-piperazine, N-hydroxyethyl-piperazine, 1-ethyl-piperazine, 1-methyl-piperazine, 1,4-dimethyl-piperazine, diethanolamine, N-methyl-aminoethanol, 1-formyl-piperazine, hydroxyethyl formamide, oxalate salts, oxylamide, nitrate salts, nitrite salts, hydroxyethylimidazole, N-(2-hydroxyethyl)-glycine, N-nitroso-piperazine, bicine, oxazolidin-2-one, N-(2-hydroxyethyl)imidazolidin-2-one, N,N'-bis-(2-hydroxyethyl)urea, N-(2-hydroxyethyl)-diethylenetriamine, N-[2-[(2-hydroxyethyl)amino]ethyl]-imidazolidin-2-one, N-(2-aminoethyl)-N'-(2-hydroxyethyl)imidazolidin-2-one, N,N'-bis(2-hydroxyethyl)imidazolidin-2-one, glycine, glycolic acid, oxalamide, oxamic acid, N-(2-hydroxyethyl)formamide, oxalic acid, N-(2-hydroxyethyl)acetamide, 2-Hydroxy-N-(2-hydroxyethyl)acetamide, N-glycylglycine, N-(2-hydroxyethyl)oxamic acid, N-(2-hydroxyethyl)piperazin-2-one, N-(2-hydroxyethyl)piperazin-3-one, ,N'-bis(2-hydroxyethyl)ethylenediamine, N-(2-hydroxyethyl)-2-(2-hydroxyethyl-amino)acetamide, N,N'-bis(2-hydroxyethyl)oxalamide, 2-(Methylamino)ethanol, N-(2-hydroxyethyl)-succinimide, N,N,N'-tris(2-hydroxyethyl)ethylenediamine, N-(2-hydroxyethyl)aziridine, N-(2-hydroxyethyl)oxazolidin-2-one, N,N-bis(2-hydroxyethyl)ethylenediamine, Triethanolamine, N,N'-bis(2-hydroxyethyl)-piperazine, N,N,N'-tris(2-hydroxyethyl)ethylenediamine, Bis-(2-(2-hydroxyethylamino)ethyl)ether, N-(2-hydroxyethyl)-N'-(2-(2-hydroxyethylamino)-ethyl)piperazine, N-2-[bis(2-hydroxyethyl)-amino]ethylpiperazine, N-2-[bis(2-hydroxyethyl)-amino]ethyl-oxazolidin-2-one, N,N,N',N'-tetrakis(2-hydroxyethyl)urea, N,N,N',N'-tetrakis(2-hydroxyethyl)ethylenediamine, N-2-[bis(2-hydroxyethyl)-amino]ethyl-N'-(2-hydroxyethyl)piperazine, N,N,N',N'-tetrakis(2-hydroxyethyl)-diethylenetriamine, N,N,N',N"-tetrakis(2-hydroxyethyl)-diethylenetriamine, Monoethanolamine, N-methyldiethanolamine, N,N'-bis(2-hydroxyethyl)piperazine, N,N,N'-tris(2-hydroxyethyl)ethylenediamine, Ethylene glycol, N,N-(dimethyl)ethanolamine, N-methylmorpholine, Diethanolamine, N,N'-dimethylpiperazine, N-(2-hydroxyethyl)oxazolidin-2-one, N-(2-hydroxyethyl)-N'-methylpiperazine, N,N'-bis(2-hydroxyethyl)-piperazine, N-[2-(2-hydroxyethyl-methylamino)ethyl]-N'-methylpiperazine, N-methyl-N,N',N'-tris(2-hydroxyethyl)-ethylenediamine, N-[2-2-hydroxyethylmethylamino)ethyl]-N'-(2-hydroxyethyl)-piperazine, N,N,N',N'-tetrakis(2-hydroxyethyl)ethylenediamine, N-methylmorpholin-2-one, N-methylmorpholin-2,6-dione, 2-[Methyl(2-hydroxyethyl)-amino] acetic acid, N,N'-trimethyl-N'-(2-hydroxyethyl)ethylenediamine, Ethyl enediamine, Imidazolidin-2-one, N-methylpiperazine, N,N'-dimethylpiperazine, N-formylpiperazine, N-ethylpiperazine, N-(2-hydroxyethyl)-N'-methyl piperazine, N-(2-hydroxyethyl)piperazine, N,2,2-trimethyl-ethanolamine, 4,4-Dimethyloxazolidin-2-one, N,4,4-trimethyloxazolidin-2-one, 4,4-Dimethyl-1-hydroxytertisobutyl-imidazolidin, 1,3-Bis-(2-hydroxy-1,1-dimethylethyl)urea, 2,4-Lutidine, Diglycolamine, 2-Hydroxylmethylpiperidine, Diethylenetriamine, Piperidine, Hexamethyleneimine, Homopiperazine, and Hexamethylenediamine.

11. Method for manufacturing a binder comprising the steps:
i) providing at least one component of the binder,
ii) providing an amine reclaimer waste composition as defined for use in at least one of claims 1 to 10,
iii) blending the amine reclaimer waste composition with at least one component, and
iv) grinding the amine reclaimer waste composition blended with the component to provide the binder, with the proviso that a cement is additionally blended with the ground amine reclaimer waste composition blended with the component in case the component in step i) is not a cement.

12. Method according to claim 11, wherein the amine reclaimer waste composition is dried before step iii) or the amine reclaimer waste composition blended with the component is dried after step iii).

13. Method according to one of claims 11 or 12, wherein the binder obtained in step iv) has a Blaine fineness from 2000 to 15000 cm²/g determined according to DIN EN 196-6:2019 Chapter 4, or a d₉₀ below 100 µm determined by laser diffraction according to ISO 13320:2020, or a sieve residue on a 90 µm sieve of below 5 % by weight determined according to DIN EN 196-6:2019 Chapter 5.

14. Method according to one of claims 11 to 13, wherein the binder comprises from 4.9 to 99.9 % by weight of cement and from 0.001 to 3 % by weight of amine reclaimer waste composition, preferably from 4.9 to 99.9 % by weight of cement and from 0.01 to 1 % by weight of amine reclaimer waste composition and most prefered from 5 to 99.9 % by weight cement and from 0.01 to 0.5 % by weight amine reclaimer waste composition.

15. Method according to claim 14, wherein the binder additionally comprises from 5 to 95 % by weight of one or more supplementary cementitious material(s) and/or from 1 to 50 % by weight of one or more fillers and/or up to 5 % by weight minor additional components as defined in EN 197-1 and EN 197-5 and/or up to 5 % by weight additives and/or admixtures and/or from 1 to 50 % by weight recycled concrete fines as described in DRAFT EN 197-6:2022 and/or from 1 to 50 % by weight carbonated recycled concrete fines.

16. Binder obtainable by a method according to one of claims 11 to 15.

17. Use of binder as defined in claim 16 or obtainable by the method according to one of claims 11 to 15 for manufacturing building materials, preferably mortar or concrete.
